# EUROPÄISCHE PATENTSCHRIFT

(11) **EP 0 823 569 B1**
(45) Veröffentlichungstag und Bekanntmachung des Hinweises auf die Patenterteilung: **13.08.2003**
(21) Anmeldenummer: 97112110.8
(22) Anmeldetag: 16.07.1997
(51) Int. Cl.: F16H 41/24

(54) **Anlaufscheiben für Wandler-Leitrad**
Bearing disc for the stator of a torque converter
Palier pour le stator d'un convertisseur de couple

(30) Priorität: 01.08.1996 DE 19631009
(43) Veröffentlichungstag der Anmeldung: 11.02.1998
(73) Patentinhaber: Ford Global Technologies, Inc., Dearborn, Michigan 48126 (US)
(72) Erfinder: Huppertz, Franz, 53937 Dreiborn (DE); Dahmen, Reiner, 53937 Gemünd (DE); Fitz, Karl-Heinz, 53937 Oberhausen (DE); Lange, Harry A., 53940 Hollerath (DE); Wirtz, Hans-Peter, 50769 Köln (DE)
(74) Vertreter: Drömer, Hans-Carsten, Dr.-Ing.

(56) Entgegenhaltungen:
- FR-A- 2 498 717
- US-A- 5 094 076
- PATENT ABSTRACTS OF JAPAN vol. 006, no. 093 (M-133), 29.Mai 1982 & JP 57 029851 A (NISSAN MOTOR CO LTD), 17.Februar 1982,

## Beschreibung

Die Erfindung betrifft eine kombination einer ringförmigen Anlaufscheibe und eines Axialnadellagers für das Leitrad eines hydrodynamischen Wandlers eines Automatikgetriebes für Kraftfahrzeuge nach dem Oberbegriff des Patentanspruches 1.

Automatikgetriebe sind in der Regel mit hydrodynamischen Wandlern, auch Trilok-Wandler genannt, ausgerüstet, welche Eingangsdrehzahl und Eingangsdrehmoment, die durch den Motor bestimmt werden, in eine Ausgangsdrehzahl und ein Ausgangsdrehmoment umwandeln, die durch den Antriebsstrang und den gegebenen Fahrzustand bestimmt sind. Hierzu weist der Wandler in einem geschlossenen Hydraulikkreislauf eine Pumpe, eine Turbine und ein zwischen Turbine und Pumpe geschaltetes Leitrad auf. Das Leitrad ist drehfest angeordnet, wogegen sich das mit der Pumpe verbundene Wandlergehäuse dreht. Zur Abstützung des Wandlergehäuses gegenüber dem Leitrad ist ein Axialnadellager vorgesehen, welches sich über die Anlaufscheibe gegen die Nabe des Leitrades abstützt. Ein ähnlicher hydrodynamischer Wandler ist aus der FR 2 498 717 A bekannt.

Bisher wurden die Anlaufscheiben aus Metall gefertigt. Ihr Ringbund zur Aufnahme des Axialnadellagers wies mehrere Ausnehmungen auf, in welche Laschen der gegen die Anlagefläche der Anlaufscheibe anliegenden Deckscheibe des Axialnadellagers hineinragten. Bei der Montage des Trilok-Wandlers fiel das Axialnadellager oft von der Anlaufscheibe ab und mußte festgehalten werden. Hierdurch ergab sich ein erhöhter Montageaufwand für die Trilok-Wandler.

Aufgabe der Erfindung ist es, die gattungsgemäße Kombination derart weiterzubilden, daß die Montage des Trilok-Wandlers vereinfacht wird.

Diese Aufgabe wird erfindungsgemäß dadurch gelöst, daß der Ringbund mit mindestens einem Rastvorsprung oder einer Rastausnehmung versehen ist und daß ein Rastkörper an der drehfesten Deckscheibe angeordnet ist, der mit dem Rastvorsprung oder der Rastausnehmung verrastbar ist, um die Deckscheibe in Anlage gegen die Anlagefläche der Anlaufscheibe zu halten.

Beim Aufschieben des Axialnadellagers auf den Ringbund verrasten diese Rastmittel, und die drehfest mit der Anlaufscheibe verbundene Deckscheibe des Axialnadellagers wird zuverlässig an der Anlaufscheibe gehalten. Das Axialnadellager, welches eine aus den beiden Deckscheiben und den Wälzkörpern bestehende Einheit bildet, wird dadurch mit der Anlaufscheibe zu einer Montageeinheit verbunden. Ein Abfallen des Axialnadellagers von der Anlaufscheibe bei der Montage ist nicht mehr möglich.

Eine besonders einfach und kostengünstig herstellbare Anlaufscheibe wird nach dem Kunststoff-Spritzgießverfahren hergestellt. Da die Anlaufscheibe auf der Vorderseite eine Anlagefläche für die Deckscheibe des Axialnadellagers und auf der Rückseite eine Anlagefläche zur Anlage gegen die Nabe des Leitrades aufweist, ist der Position der Angüsse, die durch die Angußdüsen beim Einspritzen des Kunststoffes erzeugt werden, besondere Aufmerksamkeit zu schenken. Diese Angüsse sollten einerseits möglichst zentral und gleichmäßig verteilt sein, damit sich etwa gleich lange Fließstrecken für den eingespritzen Kunststoff ergeben. Andererseits sollten sie nicht auf einer der Anlageflächen liegen, da sie dort Unebenheiten erzeugen können.

Vorteilhafterweise werden die durch die Angußdüsen erzeugten Angüsse jeweils innerhalb einer Ölführungsnut angeordnet.

Um den Angußdüsen eine ausreichende Stabilität zu verleihen, müssen sie einen Mindestdurchmesser aufweisen, der größer sein kann als die Breite der Ölführungsnuten. Aus diesem Grund weisen die Ölführungsnuten vorteilhafterweise eine durch die Angußdüsen erzeugte Querschnittsaufweitung auf.

Bei Kunststoffbauteilen ist es grundsätzlich wünschenswert, Materialanhäufungen zu vermeiden, um Formabweichungen aufgrund des Schrumpfens des erkaltenden Kunststoffes möglichst kleinzuhalten. Hierzu sind vorteilhafterweise auf der Vorderseite im radial außerhalb der Anlagefläche liegenden Randbereich der Anlaufscheibe Vertiefungen vorgesehen.

Auch die Auswerfer, die ein Kunststoffteil aus der Gußform ausstoßen, erzeugen Druckstellen und damit Unebenheiten auf dem Kunststoffteil. Damit diese Druckstellen die Anlageflächen der Anlaufscheibe nicht beschädigen, werden die Auswerfer vorzugsweise so angeordnet, daß sie jeweils in eine der Vertiefungen außerhalb der Anlagefläche drücken.

Weitere Merkmale und Vorzüge der Erfindung ergeben sich aus der nachfolgenden Beschreibung eines Ausführungsbeispiels der erfindungsgemäßen Anlaufscheibe unter Bezugnahme auf die beigefügten Zeichnungen. Die Zeichnungen zeigen in
- Fig. 1: eine teilgeschnittene schematische Darstellung eines Trilok-Wandlers eines Automatikgetriebes für Kraftfahrzeuge,
- Fig. 2: die Draufsicht auf eine erfindungsgemäße Anlaufscheibe,
- Fig. 3: die Seitenansicht der Anlaufscheibe aus Fig. 2 in geschnittener Darstellung,
- Fig. 4: die Rückansicht der Anlaufscheibe aus Fig. 2 und 3,
- Fig. 5: eine der Fig. 2 entsprechende Darstellung der Anlaufscheibe mit darauf liegender drehfester Deckscheibe des Axialnadellagers und
- Fig. 6: eine der Fig. 3 entsprechende Darstellung der Anlaufscheibe mit schematisch eingezeichnetem Axialnadellager.

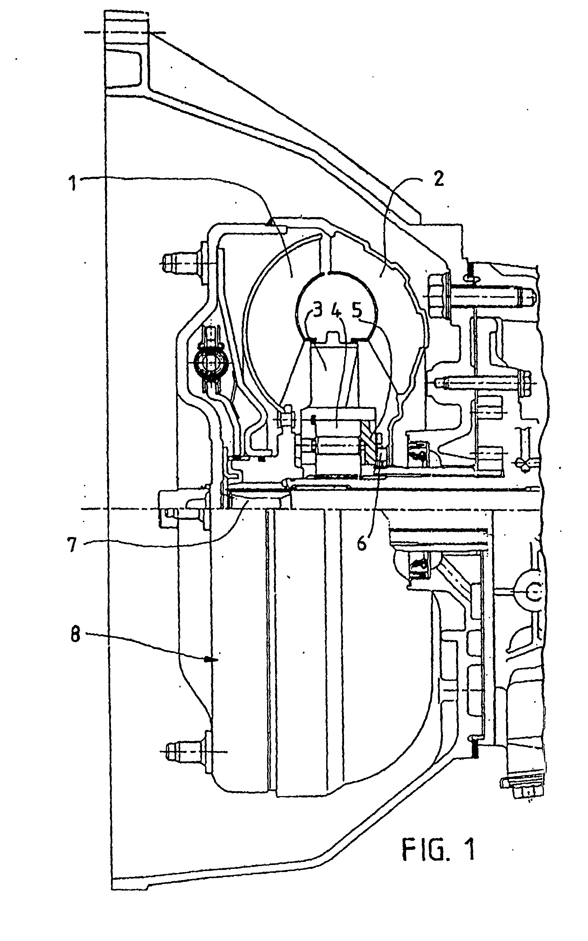

In der Fig. 1 ist ein herkömmlicher Trilok-Wandler dargestellt, dessen obere Hälfte geschnitten eingezeichnet ist. Aus Gründen der Übersichtlichkeit wurden die Schraffuren in der oberen Hälfte weitgehend weggelassen. Lediglich die erfindungsgemäße Anlaufscheibe 5 ist schraffiert dargestellt.

Der Trilok-Wandler aus Fig. 1 besteht aus einer Turbine 1, einer Pumpe 2 und einem drehfesten Leitrad 3, welche einen geschlossenen hydraulischen Kreislauf bilden. Das Leitrad 3 ist drehfest angeordnet, wogegen Turbine 1 und Pumpe 2 sich gegenüber dem Leitrad 3 und gegeneinander drehen können. Mit der Pumpe 2 ist das Gehäuse 8 des Trilok-Wandlers verbunden. In der Fig. 1 ist die Anlaufscheibe 5 schraffiert dargestellt, welche einerseits gegen die Leitradnabe 4 und andererseits über ein Axialnadellager 6 gegen das Gehäuse 8 des Trilok-Wandlers anliegt.

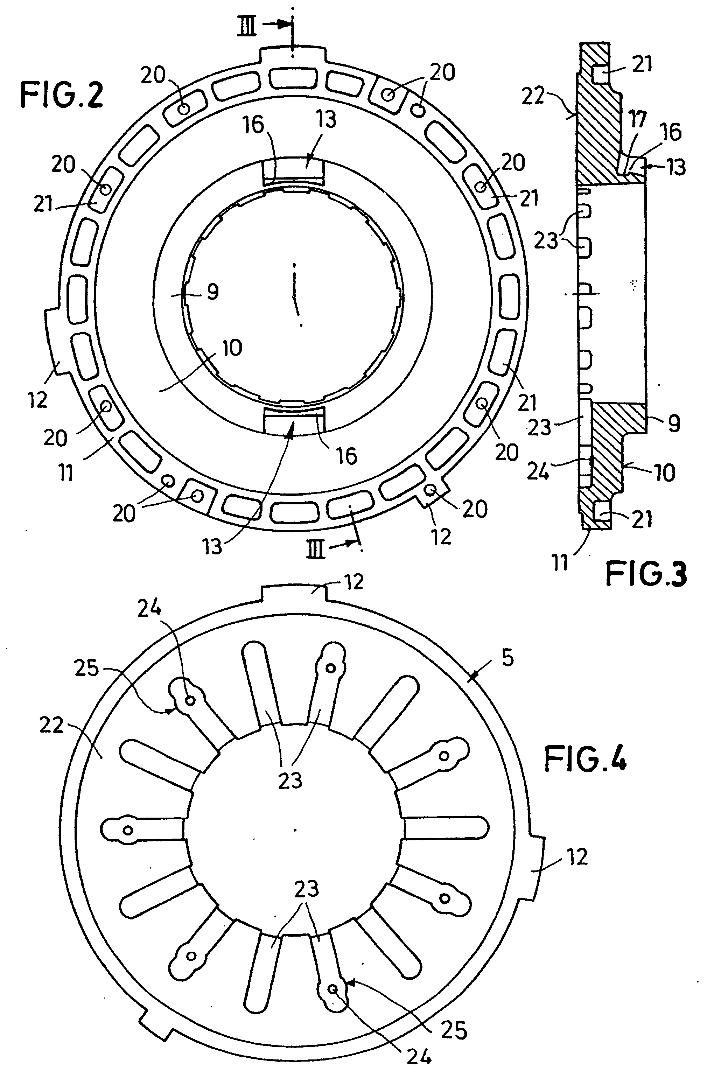

In den Fig. 2 bis 4 ist eine Ausführungsform der erfindungsgemäßen Anlaufscheibe 5 zu erkennen. In radialer Richtung von innen nach außen besteht die Anlaufscheibe 5 aus einem inneren Ringbund 9, einer Anlagefläche 10 für das Axialnadellager 6 und einem äußeren Randbereich 11. Aus dem äußeren Randbereich 11 ragen radiale Haltevorsprünge 12 heraus, welche in entsprechende Ausnehmungen der Leitradnabe 4 (Fig. 1) eingreifen und die Anlaufscheibe 5 gegenüber der Leitradnabe 4 drehfest halten.

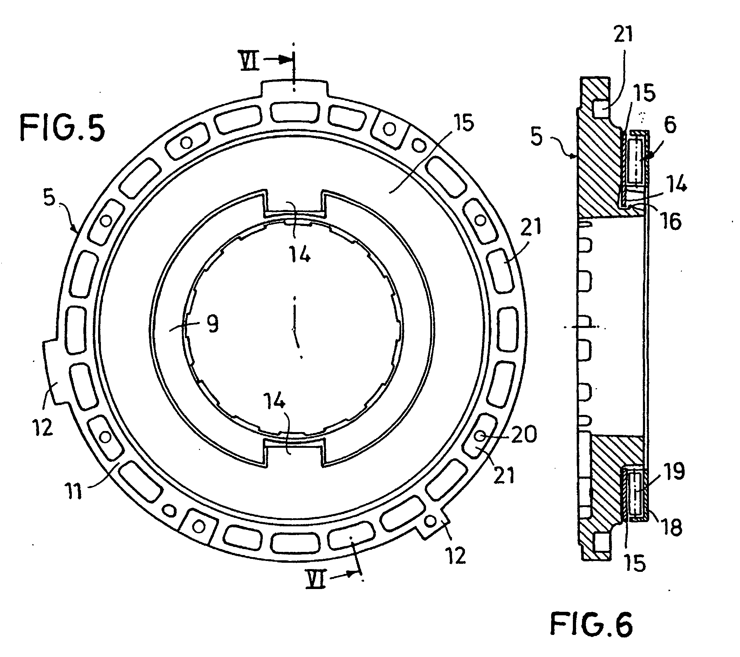

Wie in Verbindung mit den Fig. 5 und 6 erkennbar, stützt der innere Ringbund 9 den inneren Umfangsbereich des Axialnadellagers 6. An zwei einander diametral gegenüberliegenden Stellen weist der innere Ringbund 9 je eine sich radial erstrekkende Ausnehmung 13 auf, die zur Aufnahme eines radialen Vorsprungs 14 vorgesehen ist, der an der gegen die Anlagefläche 10 anliegenden Deckscheibe 15 des Axialnadellagers 6 angeordnet ist. Durch diese radialen Vorsprünge 14 wird die Deckscheibe 15 gegen Verdrehen gegenüber der Anlagefläche 10 der Anlaufscheibe 5 gesichert.

In den Ausnehmungen 13 sind radial nach außen ragende Rastvorsprünge 16 angeordnet, welche geringfügig hinterschnittene Rastausnehmungen 17 im radialen Wandbereich der Ausnehmungen 13 definieren. In diese Rastausnehmungen 17 hinein ragen die radial innenliegenden Kanten der radialen Vorsprünge 14 (Rastvorsprünge) der Deckscheibe 15 des Axialnadellagers 6. Die Deckscheibe 15 wird auf diese Weise in axialer Richtung an der Anlaufscheibe 5 fixiert.

Da die drehfeste Deckscheibe 15, die freie Deckscheibe 18 und die Wälzkörper 19 des Axialnadellagers 6 mittels eines (nicht dargestellten) Käfigs zu einer Einheit verbunden sind, können die Bauteile des Axialnadellagers 6 nicht von der Anlaufscheibe 5 in verrastetem Zustand abfallen.

Es sind Anlaufscheiben bekannt, deren Ringbund außerhalb der Anlagefläche liegt und das Axialnadellager von außen umfaßt, wobei die radialen Vorsprünge der Deckscheibe des Axialnadellagers nach außen ragen. Auch bei diesen Anlaufscheiben kann die erfindungsgemäße Verrastung angebracht werden.

In Fig. 2 sind die Druckstellen 20 zu erkennen, die durch die Auswerfer zum Ausstoßen der Anlaufscheibe 5 aus der Gußform bei der Herstellung entstehen. Alle Druckstellen 20 liegen außerhalb der Anlagefläche. 10 für die Deckscheibe 15. Vorteilhafterweise liegen die meisten Druckstellen 20 innerhalb von Vertiefungen 21, die in dem äußeren Randbereich 11 der Anlaufscheibe 5 angeordnet sind.

Die Vertiefungen 21 dienen insbesondere dazu, im äußeren Randbereich 11 übermäßige Materialanhäufungen des Kunststoffes zu vermeiden. Dies führt zu einer vorteilhaften Materialeinsparung bei der Herstellung der Anlaufscheibe 5 und reduziert die Gefahr, daß die Anlaufscheibe 5 aufgrund von Schrumpfungen des Kunststoffs beim Abkühlen Formabweichungen aufweist.

Auf der in Fig. 4 dargestellten Rückseite der Anlaufscheibe 5 liegt die Anlagefläche 22 zur Anlage gegen die Leitradnabe 4 (Fig. 1). In dieser Anlagefläche 22 verlaufen radiale Ölführungsnuten 23, die in der inneren Umfangsfläche der Anlaufscheibe 5 münden. In jeder zweiten Ölführungsnut 23 liegt ein Anguß 24, der durch die Angußdüsen zum Einspritzen des Kunststoffes beim Herstellen der Anlaufscheibe 5 entsteht. Im Bereich dieser Angüsse 24 weisen die Ölführungsnuten 23 Querschnittsaufweitungen 25 auf, die von dem Außenumfang der Angußdüsen bei der Herstellung der Anlaufscheibe 5 erzeugt werden.

Wenn die Eigenelastizität der Rastvorsprünge 16 an dem Ringbund 9 ein Verrasten der Deckscheibe 15 nicht erlaubt, können die radialen Vorsprünge 14, deren Abschlußkanten die Rastkörper der Deckscheibe 15 bilden, federnd ausgestaltet sein.

Es ist für den Fachmann offensichtlich, daß die Rastmittel an dem Ringbund 9 und an der Deckscheibe 15 beliebig ausgestaltet sein können, z.B. als Bohrung mit einrastbarem Raststift, solange durch das Verrasten der Rastmittel ein Abziehen des Axialnadellagers 6 von der Anlaufscheibe 5 in axialer Richtung vermieden wird.

### Bezugszeichenliste:

- 1: Turbine
- 2: Pumpe
- 3: Leitrad
- 4: Leitradnabe
- 5: Anlaufscheibe
- 6: Axialnadellager
- 7: Getriebewelle
- 8: Gehäuse
- 9: innerer Ringbund
- 10: Anlagefläche
- 11: äußerer Randbereich
- 12: radialer Haltevorsprung
- 13: Ausnehmung
- 14: radialer Vorsprung, Rastkörper
- 15: Deckscheibe
- 16: Rastvorsprung
- 17: Rastausnehmung
- 18: Deckscheibe
- 19: Wälzkörper
- 20: Druckstelle
- 21: Vertiefung
- 22: Anlagefläche
- 23: Ölführungsnut
- 24: Anguß
- 25: Querschnittsaufweitung

## Patentansprüche

1. Kombination einer ringförmigen Anlaufscheibe (5) und eines Axialnadellagers (6) für das Leitrad (3) eines hydrodynamischen Wandlers eines Automatikgetriebes für Kraftfahrzeuge, wobei die Anlaufscheibe (5) eine vordere Anlagefläche (10) für eine drehfeste Deckscheibe (15) des Axialnadellagers (6), aufweist, und wobei die Anlagefläche (10) zum Fixieren der Deckscheibe (15) durch einen Ringbund (9) begrenzt ist, der mindestens eine sich radial erstreckende Ausnehmung (13) zur Aufnahme eines radialen Vorsprungs (14) der Deckscheibe (15) aufweist, und mit einer rückseitigen Anlagefläche (22), welche mit in der inneren Umfangsfläche der Anlaufscheibe (5) mündenden radialen Ölführungsnuten (23) versehen ist, **dadurch gekennzeichnet, daß** der Ringbund (9) mit mindestens einem Rastvorsprung (16) oder einer Rastausnehmung (17) versehen ist und daß ein Rastkörper (14) an der drehfesten Deckscheibe (15) angeordnet ist, der mit dem Rastvorsprung (16) oder der Rastausnehmung (17) verrastbar ist, um die Deckscheibe (15) in Anlage gegen die Anlagefläche (10) der Anlaufscheibe (5) zu halten.

2. Kombination nach Anspruch 1, **dadurch gekennzeichnet, daß** sie aus Kunststoff im Spritzgießverfahren hergestellt ist und die durch die Angußdüsen zum Einspritzen des Kunststoffes in die geschlossene Gußform erzeugten Angüsse (24) jeweils innerhalb einer Ölführungsnut (23) liegen.

3. Kombination nach Anspruch 2, **dadurch gekennzeichnet, daß** mehrere Ölführungsnuten (23) eine durch den Außenumfang der Angußdüsen erzeugte Querschnittsaufweitung (25) aufweisen.

4. Kombination nach einem der vorangegangenen Ansprüche, **dadurch gekennzeichnet, daß** sie auf der Vorderseite im radial außerhalb der Anlagefläche (10) liegenden Randbereich (11) mit Vertiefungen (21) versehen ist.

5. Kombination nach einem der vorangehenden Ansprüche, **dadurch gekennzeichnet, daß** die durch die Auswerfer zum Ausstoßen der Anlaufscheibe (5) aus der Gußform erzeugten Druckstellen (20) außerhalb der Anlageflächen (10) liegen.

6. Kombination nach Anspruch 5, **dadurch gekennzeichnet, daß** die Druckstellen (20) jeweils in einer der Vertiefungen (21) im Randbereich (11) liegen.

## Claims

1. Combination of an annular stop disc (5) and of an axial needle bearing (6) for the stator (3) of a hydrodynamic converter of an automatic transmission for motor vehicles, the stop disc (5) having a front bearing surface (10) for a rotationally fixed cover disc (15) of the axial needle bearing (6), and the bearing surface (10) being delimited, for fixing the cover disc (15), by an annular collar (9) which has at least one radially extending recess (13) for receiving a radial projection (14) of the cover disc (15), and with a rear bearing surface (22) which is provided with radial oil guide grooves (23) issuing in the inner circumferential surface of the stop disc (5), **characterized in that** the annular collar (9) is provided with at least one latching projection (16) or one latching recess (17), and **in that** the rotationally fixed cover disc (15) has arranged on it a latching body (14) which is capable of being latched together with the latching projection (16) or the latching recess (17), in order to hold the cover disc (15) in bearing contact against the bearing surface (10) of the stop disc (5).

2. Combination according to Claim 1, **characterized in that** it is produced from plastic by the injection-moulding method, and the sprues (24) produced by the casting nozzles for injecting the plastic into the closed casting mould lie in each case within an oil guide groove (23).

3. Combination according to Claim 2, **characterized in that** a plurality of oil guide grooves (23) have a cross-sectional widening (25) produced by the outer circumference of the casting nozzles.

4. Combination according to one of the preceding claims, **characterized in that** it is provided with depressions (21) on the front side in the edge region (11) lying radially outside the bearing surface (10).

5. Combination according to one of the preceding claims, **characterized in that** the pressure points (20) produced by the ejectors for ejecting the stop disc (5) from the casting mould lie outside the bearing surface (10).

6. Combination according to Claim 5, **characterized in that** the pressure points (20) lie in each case in one of the depressions (21) in the edge region (11).

## Revendications

1. Combinaison d'un disque de butée annulaire (5) et d'un palier à aiguilles axial (6) pour le stator (3) d'un convertisseur hydrodynamique d'une boîte de vitesse automatique pour véhicules automobiles, le disque de butée (5) présentant une surface d'appui avant (10) pour un disque de recouvrement fixe en rotation (15) du palier à aiguilles axial (6), et la surface d'appui (10) pour la fixation du disque de recouvrement (15) étant limitée par un épaulement annulaire (9) qui présente au moins un évidement (13) s'étendant radialement pour recevoir une saillie radiale (14) du disque de recouvrement (15), et comprenant une surface d'appui arrière (22), qui est pourvue de rainures de guidage d'huile radiales (23) débouchant dans la surface périphérique intérieure du disque de butée (5), **caractérisée en ce que** l'épaulement annulaire (9) est pourvu d'au moins une saillie d'encliquetage (16) ou d'un évidement d'encliquetage (17) et **en ce qu'**un corps d'encliquetage (14) est disposé sur le disque de recouvrement (15) fixe en rotation, lequel peut être encliqueté avec la saillie d'encliquetage (16) ou l'évidement d'encliquetage (17), afin de maintenir le disque de recouvrement (15) en appui contre la surface d'appui (10) du disque de butée (5).

2. Combinaison selon la revendication 1, **caractérisée en ce qu'**elle est fabriquée à partir de plastique dans un procédé de moulage par injection et que les carottes (24) produites par les buses à carotte pour l'injection du plastique dans le moule fermé se trouvent à chaque fois à l'intérieur d'une rainure de guidage d'huile (23).

3. Combinaison selon la revendication 2, **caractérisée en ce que** plusieurs rainures de guidage d'huile (23) présentent un élargissement (25) de leur section transversale produit par la périphérie extérieur des buses à carotte.

4. Combinaison selon l'une quelconque des revendications précédentes, **caractérisée en ce qu'**elle est pourvue de renfoncements (21) sur la face avant dans la région périphérique (11) se trouvant radialement en dehors de la surface d'appui (10).

5. Combinaison selon l'une quelconque des revendications précédentes, **caractérisée en ce que** les points de pression (20) produits par les éjecteurs pour l'éjection des disques de butée (5) hors du moule se trouvent en dehors de la face d'appui (10).

6. Combinaison selon la revendication 5, **caractérisée en ce que** les points de pression (20) se trouvent chacun dans un des renfoncements (21) dans la région périphérique (11).
